# EUROPÄISCHE PATENTANMELDUNG

(11) **EP 4 613 157 A1**
(43) Veröffentlichungstag der Anmeldung: **10.09.2025**
(21) Anmeldenummer: 25158628.5
(22) Anmeldetag: 18.02.2025
(51) Int. Cl.: A47J 47/02, B65D 45/18, F25D 23/04

(54) **LEBENSMITTELBEHÄLTER UND LAGERSYSTEM FÜR LEBENSMITTELBEHÄLTER**

(30) Priorität: 05.03.2024 BE 202405127
(71) Anmelder: Miele & Cie. KG, 33332 Gütersloh (DE)
(72) Erfinder: Thomas, Sebastian, 85293 Reichertshausen (DE); Stüttgen, York, 59494 Soest (DE); Koch, Daniel, 32120 Hiddenhausen (DE); Kirschbaum, Anna, 33719 Bielefeld (DE)

(57) **Zusammenfassung**

Die Erfindung betrifft einen Lebensmittelbehälter (1) mit einem Boden (13), Seitenwänden (11a, 11b, 11c), und einem abnehmbaren Deckel (3), der mindestens ein Verriegelungsscharnier mit einer Lasche (31a, 31b, 31c, 31d) aufweist, das einer der Seitenwände (11a, 11b, 11c) zugeordnet und damit zum Verschließen des Lebensmittelbehälters mit der Seitenwand (11a, 11b, 11c) in Eingriff bringbar ist. In einem durch den Deckel (3) verschlossenen Zustand des Lebensmittelbehälters (1) ist ein von dem Deckel (3) weg gerichteter Rand der Lasche (31a, 31b, 31c, 31d) von der Seitenwand (11a, 11b, 11c) so beabstandet, dass zwischen der Seitenwand (11a, 11b, 11c) und dem von dem Deckel (3) weg gerichteten Rand der Lasche (31a, 31b, 31c, 31d) ein Freiraum (35b, 35d) ausgebildet ist.

## Beschreibung

Die Erfindung betrifft einen Lebensmittelbehälter und ein Lagersystem für Lebensmittelbehälter. In der Regel werden in einem Haushalt Lebensmittel in Aufbewahrungsbehältern gelagert. Diese Behälter werden sowohl in Kühl- und Gefriergeräten, in Zubereitungsgeräten und in Lagerschränken verstaut. Die Lagerflächen in den Küchen werden immer umfangreicher und es werden generell mehrere unterschiedliche Lebensmittel an diversen Plätzen gelagert.

Manchmal geraten diese eingelagerten Lebensmittel aber in Vergessenheit. Dies kann aktuell nur rudimentär mit App-Unterstützung gesteuert/verhindert werden, da unter anderem die Pflege der Daten über App für weniger Technikaffine Nutzer zeitaufwendig oder überhaupt nicht erwünscht ist. Die momentan gebräuchlichste Lösung ist, Lebensmittel in Behältern zu verwahren. Eine mögliche Identifizierung der gelagerten Lebensmittel kann durch Transparenz der Behälter erfolgen. Allerdings kommt es insbesondere bei eingefrorenen Lebensmitteln zu einer optischen Veränderung der Lebensmittel, wodurch eine optische Erkennung schwierig wird. Eine eindeutige Zuordnung des Inhalts ist in den meisten Fällen nur mit einer zusätzlichen Beschriftung des Behälters möglich.

Herkömmliche Möglichkeiten der Kennzeichnung durch selbstklebende und beschreibbare Aufkleber sind keine gute Lösung, da diese in gewissen Lagersituationen die Haftung verlieren und verloren gehen, z.B. beim Einfrieren, wenn der Klebstoff aufgrund der tiefen Temperaturen seine Eigenschaften verliert. Außerdem ist es oft nicht möglich, derartige Aufkleber rückstandsfrei zu entfernen. Oft verbleiben Reste des Klebstoffs und/oder des Aufklebers an dem Lebensmittelbehälter. Darüber hinaus bestehen die Aufkleber üblicherweise aus Papier und Klebstoffverbindungen, die schwer wiederzuverwerten sind. Als bekannte Alternative dazu bietet es sich an, die Lebensmittelbehälter direkt zu beschriften, was aber zu Problemen beim Anbringen der Beschriftung oder Entfernen der Beschriftung nach Gebrauch führen kann.

Ein weiteres Problem bekannter Lagersysteme ist, dass Lebensmittelbehälter solcher Lagersystems in Ihrer Größe und Form nicht an die Innenausstattung eines Kühl- oder Gefriergerätes angepasst sind. Dies hat zur Folge, dass die genannten Geräte nicht vollumfänglich genutzt werden können und somit ein ungenutzter Leerraum und damit ein ein erhöhter Energiebedarf zum Kühlen dieses Leerraums entsteht.

Bekannt sind Beschriftungsetiketten erhältlich, die auch farbig ausgeführt sein können. Als Beispiel sei hier die Firma Fackelmann genannt, die derartige Etiketten in unterschiedlicher Form und Farbe anbietet. Die Firma Ikea bietet ebenfalls Lagerbehälter mit Klebeetiketten an.

Hier stellt sich das Problem, dass insbesondere bei Lagerung in Kühl- oder Gefriergeräten sich die Klebeetiketten lösen können. Dies kann durch Feuchtigkeit (Kondensationsfeuchtigkeit) entstehen, sodass ein Klebeetikett nur schwer anzubringen ist, oder dadurch, dass das verwendete Adhäsiv bei geringen Temperaturen die Haftung verliert. Somit ist eine eindeutige Zuordnung des Inhalts eines derart unzureichend beschrifteten Lebensmittelbehälters nur noch erschwert bis gar nicht mehr möglich. Darüber hinaus kann es bei längerer Lagerung, insbesondere in Gefriergeräten, zu einer Verwitterung der Beschriftung kommen, sodass diese einfach nicht mehr lesbar ist.

Darüber hinaus entsteht ein Problem, dass ein Ablösen der Klebeetiketten unter Umständen nur schwierig möglich ist, da Kleberreste auf dem Deckel verbleiben können, oder Reste des Etiketts in einer Spülmaschine verbleiben können.

Unter dem Namen Zwilling Fresh & Save sind Behälter (Kunststoffboxen) bekannt, die einen Deckel aufweisen, auf dem ein QR-Code angebracht ist. Über eine von der Firma Zwilling angebotene App können die in den einzelnen Kunststoffkisten gelagerten Lebensmittel verwaltet werden. Da es sich hier um ein aus dem Internet abrufbares Produktangebot handelt, wird auf einen druckschriftlichen Nachweis dieses Stands der Technik verzichtet.

Die Verwendung einer derartigen optischen Schnittstelle bietet viele Vorteile. Beispielsweise können die gelagerten Lebensmittel eindeutig erfasst und verwaltet werden. Entsprechend ist es möglich, auf Basis von verknüpften Rezeptdaten eine Einkaufsliste zu erstellen. Allerdings bedeutet das Verwalten der Lebensmittel mittels App im Vergleich zu einem einfachen Beschriften unter anderem einen erhöhten Zeitaufwand, der von weniger technikaffinen Benutzern üblicherweise gescheut wird. Somit ist davon auszugehen, dass derartige Benutzer sich wieder der weniger gut geeigneten Klebeetiketten bedienen oder direkt auf den Behälter schreiben.

Darüber hinaus ist es bei bekannten Behältern schwierig, diese platzsparend in vorgegebenen Regalen und Haltern in Kühlschränken und Gefriergeräten unterzubringen, da vorgesehene Aufnahmeräume für derartige Behälter meistens nicht auf die Behältergröße ausgerichtet sind. Daher kann es zu Schiefstellungen des Lebensmittelbehälters, zu Vergeudung von Lagerraum und damit zu einem unnötigen Energieverbrauch kommen.

Somit besteht Bedarf an einem Lebensmittelbehälter, der wiederholt einfach zu markieren ist und platzsparend untergebracht werden kann.

Erfindungsgemäß wird dieses Problem durch einen Lebensmittelbehälter mit den Merkmalen des Patentanspruchs 1 gelöst. Vorteilhafte Ausgestaltungen und Weiterbildungen der Erfindung ergeben sich aus den nachfolgenden Unteransprüchen.

Ein erfindungsgemäßer Lebensmittelbehälter weist einen Boden, Seitenwände und einen abnehmbaren Deckel auf. Der abnehmbare Deckel weist mindestens ein Verriegelungsscharnier mit einer Lasche auf, das einer der Seitenwände zugeordnet und zum Verschließen des Lebensmittelbehälters mit der Seitenwand in Eingriff bringbar ist. In einem durch den Deckel verschlossenen Zustand des Lebensmittelbehälters ist ein von dem Deckel weg gerichteter Rand der Lasche von der Seitenwand so beabstandet, dass zwischen der Seitenwand und dem von dem Deckel weg gerichteten Rand der Lasche ein Freiraum ausgebildet ist.

Aufgrund des Freiraums kann eine Wand eines Abstellfachs unter der Lasche angeordnet sein, wodurch die Lasche selbst für einen Benutzer erkennbar ist, der auf das Abstellfach blickt. Somit sind sämtliche an der Lasche angebrachten Informationen jederzeit zugänglich, ohne dass der Behälter aus dem Abstellfach entnommen werden muss.

Vorteilhaft kann die Lasche ausgehend von dem Deckel für eine vorbestimmte Länge parallel zu ihrer zugeordneten Seitenwand verlaufen, um sie dann von der Seitenwand zu entfernen.

Gemäß dieser Ausgestaltung ist ein sicherer Verschluss des Lebensmittelbehälters sichergestellt, während der Freiraum dennoch ausgebildet wird.

Vorteilhaft kann die Lasche an ihren von dem Deckel weg gerichteten Rand einen zu der Seitenwand gerichteten Vorsprung aufweisen.

Ein derartiger Vorsprung ist gut, um die Lasche mit der Hand zu ergreifen und so den Deckel von dem Lebensmittelbehälter abzunehmen.

Vorteilhaft kann der Vorsprung von der Seitenwand beabstandet sein.

Gemäß dieser Ausgestaltung ist sichergestellt, dass der Freiraum durch den Vorsprung nicht eingeschränkt wird.

Vorteilhaft kann die Lasche eine Klammer aufweisen, welche den von dem Deckel weg gerichteten Rand der Lasche umfasst im Sinne von umgreift.

Eine derartige Klammer kann beliebig gefärbt oder auch durchsichtig ausgestaltet sein. Durch Zuordnen einer bestimmten Farbe zu bestimmten Eigenschaften der in dem Lebensmittelbehälter gelagerten Lebensmittel kann für den Benutzer sofort erkennbar sein, welche Art von Lebensmittel sich in dem Lebensmittelbehälter befindet.

Vorteilhaft kann die Klammer abnehmbar und/oder entlang des von dem Deckel weg gerichteten Rand verschiebbar ausgebildet sein.

Somit kann nicht nur durch die Farbe der Klammer, sondern auch durch die Position der Klammer eine Zuordnung zu dem Inhalt des Lebensmittelbehälters erfolgen. Darüber hinaus können mehrere Klammern nebeneinander an der Lasche angebracht sein, was die Anzahl an Kodierungsmöglichkeiten erhöht. Es ist auch möglich, dass mehrere Klammern nebeneinander angeordnet sind und eine oder ein paar Klammern wieder abgenommen werden. Durch die zusätzliche Leerstelle(n) entsteht somit eine Erhöhung der Zahl an Kombinationsmöglichkeiten. Außerdem ist es im Fall von Klammern aus einem transparenten Material möglich, diese abzunehmen und ein beschriftetes Stück Papier so zwischen der Klammer und der Lasche anzubringen, dass die Beschriftung durch die transparente Klammer hindurch lesbar ist.

Vorteilhaft kann die Klammer mit einem Vorsprung mittels Formschluss in Eingriff sein, der an dem von dem Deckel weg gerichteten Rand ausgebildet ist.

Durch diese Ausgestaltung ist ein unabsichtliches Lösen oder Herabfallen der Klammer verhindert, sodass die Kodierung zuverlässig erhalten bleiben kann.

Vorteilhaft kann an der Lasche eine optische Schnittstelle, bevorzugt in Form eines QR-Codes ausgebildet sein.

Durch das Bereitstellen eines QR-Codes an der Lasche kann ein Benutzer alternativ oder zusätzlich zu der voranstehend beschriebenen Kodierung eine App einsetzen um den Inhalt des Lebensmittelbehälters zu verwalten.

Ein erfindungsgemäßes Lagersystem für Lebensmittelbehälter weist ein Abstellfach auf.

Das Abstellfach kann in eine Wand, einen Schrank oder eine Schranktür, bevorzugt eine Tür eines Kühlschranks eingesetzt werden. Auch ist es möglich, dass das Abstellfach an einer Wand, in einem Schrank oder an einer Schranktür, bevorzugt einer Tür eines Kühlschranks befestigt ist.

Das Abstellfach weist zumindest einen Boden und eine Vorderwand auf. Mindestens ein Lebensmittelbehälter wie der voranstehend beschriebene ist in das Abstellfach einsetzbar. Bei einem in das Abstellfach eingesetzten Lebensmittelbehälter ist ein Randabschnitt der Vorderwand des Abstellfachs in dem Freiraum zwischen der Seitenwand des Lebensmittelbehälters und dem von dem Deckel weg gerichteten Rand der Lasche aufgenommen.

Somit überlappt die Lasche die Wand des Abstellfachs, wodurch die an dem Rand der Lasche angebrachte Klammer, eine eventuell darunter angebrachte Beschriftung und/oder ein an der Lasche vorhandener QR-Code zuverlässig erfasst werden können, ohne dass es erforderlich ist, den Lebensmittelbehälter aus dem Abstellfach zu entnehmen.

Ein Schrank, insbesondere Kühlschrank, Gefrierschrank oder Kühl-Gefrierschrank gemäß der Erfindung weist eine Aufnahme auf, um ein derartiges Lagersystem einzusetzen. Vorteilhaft kann die Aufnahme in einer Tür des Schranks vorgesehen sein.

Weitere Vorteile der Erfindung werden aus der folgenden Beschreibung eines derzeit bevorzugten Ausführungsbeispiels ersichtlich. In den Figuren zeigt:
- Fig. 1: eine Vorderansicht eines Lebensmittelbehälters gemäß der Erfindung;
- Fig. 2: eine Seitenansicht eines Lebensmittelbehälters gemäß der Erfindung;
- Fig. 3: eine Vorderansicht einer weiteren Ausführungsform eines Lebensmittelbehälters gemäß der Erfindung;
- Fig. 4: eine Seitenansicht einer weiteren Ausführungsform eines Lebensmittelbehälters gemäß der Erfindung;
- Fig. 5: eine Vorderansicht gemäß einer weiteren Ausführungsform eines Lebensmittelbehälters gemäß der Erfindung;
- Fig. 6: eine schematische Ansicht einer Tür mit einem Lagersystem für Lebensmittelbehälter gemäß der Erfindung;
- Fig. 7: eine Seitenansicht eines erfindungsgemäßen Lagerbehälters; und
- Fig. 8: eine Seitenansicht eines erfindungsgemäßen Lebensmittelbehälters in einem Lagersystem.

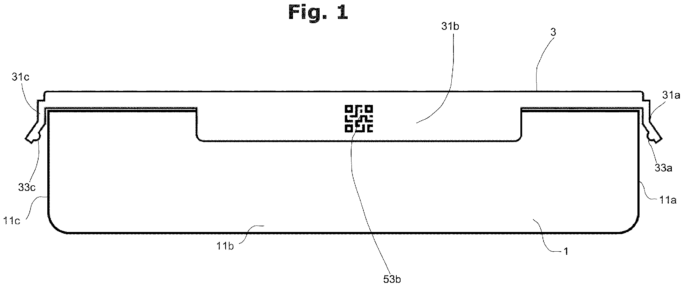

Bevorzugte Ausführungsformen der Erfindung werden anhand der Figuren 1 bis 8 beschrieben.

Die Fig. 1 ist eine Längsseitenansicht eines Lebensmittelbehälters 1. Der Lebensmittelbehälter 1 weist vier Seitenwände 11a, 11b, 11c und 11d zu einem Boden 13 auf. Im Wesentlichen handelt es sich bei dem Lebensmittelbehälter 1 um einen oben offenen Quader. Zum Verschließen des Lebensmittelbehälters 1 dient ein Deckel 3. Der Deckel 3 ist im Wesentlichen rechteckig ausgebildet und vorgesehen, an Oberkanten der Seitenwände 11a, 11b, 11c und 11d des Lebensmittelbehälters 1 aufgesetzt zu werden. An den Seiten des Deckels 3 sind Laschen 31a, 31b, 31c und 31d vorgesehen, die mittels Scharnier an dem Deckel 3 angebracht sind. Zum Verschließen des Lebensmittelbehälters 1 werden die Laschen 31a, 31b, 31c und 31d an die Seitenwände 11a, 11b, 11c und 11d angeklappt. Die Laschen 31a, 31b, 31c und 31d geraten mittels entsprechender Mittel mit an den Seitenwänden 11a, 11b, 11c und 11d vorgesehenen Gegenstücken in formschlüssigen Eingriff. Somit ist ausgeschlossen, dass die Laschen 31a, 31b, 31c, 31d nach dem Schließen wieder unbeabsichtigt in eine offene Position aufklappen.

Somit ist der Lebensmittelbehälter eins durch das umklappen der Laschen 31a, 31b, 31c und 31d zuverlässig verschlossen.

An jeder der Laschen 31a, 31b, 31c, 31d ist ein QR-Code 53b, 53c angebracht. Somit ist es möglich, unabhängig von einer Lage in einem Abstellfach zumindest einen QR-Code zu erfassen und auszulösen.

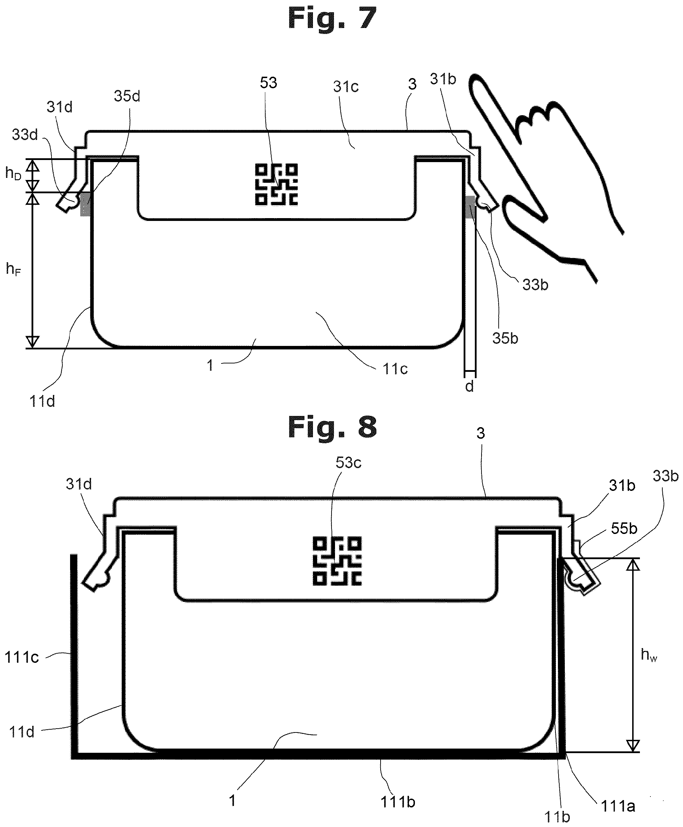

Die Laschen 31a, 31b, 31c, 31d verlaufen von dem Deckel ausgehend parallel zu ihrer zugeordneten Seitenwand 11a, 11b, 11c, 11d, um nach Erreichen einer vorbestimmten Länge von dem Rand des Lebensmittelbehälters 1 abzuknicken. Dies ist insbesondere aus der Fig. 7 ersichtlich, wo die gerade beschriebene vorbestimmte Länge h_{D} ersichtlich ist. Nach Erreichen dieser vorbestimmten Länge h_{D} knickt die Lasche 31a, 31b, 31c, 31d in einer Seitenansicht betrachtet ab, um sich immer weiter von der zugeordneten

Seitenwand 11a, 11b, 11c, 11d des Lebensmittelbehälters 1 zu entfernen. Somit entsteht ein Freiraum zwischen der Lasche und der zugeordneten Seitenwand des Behälters. Die Höhe des Freiraums beträgt von dem Boden des Lebensmittelbehälters 1 aus geht sehen h_{F}, wie ebenfalls aus der Fig. 7 ersichtlich ist. In der Fig. 7 ist der Freiraum 35d zwischen der Lasche 31d und der Seitenwand 11d in Form eines grauen Felds dargestellt.

Es sei ergänzend noch darauf hingewiesen, dass der Verschlussmechanismus zum Verschließen des Lebensmittelbehälters 1 durch Anklappen der Laschen 31a, 31b, 31c und 31d aus den schematischen Figuren nicht ersichtlich ist.

Darüber hinaus ist an jeder der jeweiligen Seitenwand 11a, 11b, 11c, 11d der Lasche 31a, 31b, 31c, 31d zugewandten Innenseite ein wulstartiger Vorsprung 33a, 33b, 33c, 33d ausgebildet. Dieser wulstartige Vorsprung 33a, 33b, 33c, 33d dient zum einfachen Angreifen der Lasche 31a, 31b, 31c, 31d, um diese zu öffnen. Dies ist schematisch aus der Fig. 7 ersichtlich.

Wie aus der Fig. 8 ersichtlich ist, dient dieser wulstartige Vorsprung 33a, 33b, 33c, 33d außerdem dazu, eine dem Rand der Lasche 31a, 31b, 31c, 31d umgreifende Klammer 55b, 57b, 57c mittels Formschluss so festzuhalten, dass ein Abrutschen der Klammer 33b von dem Rand der Lasche 31b verhindert ist (in der Fig. 8 ist die Klammer 33b an der Lasche 31b in einer Seitenansicht gezeigt).

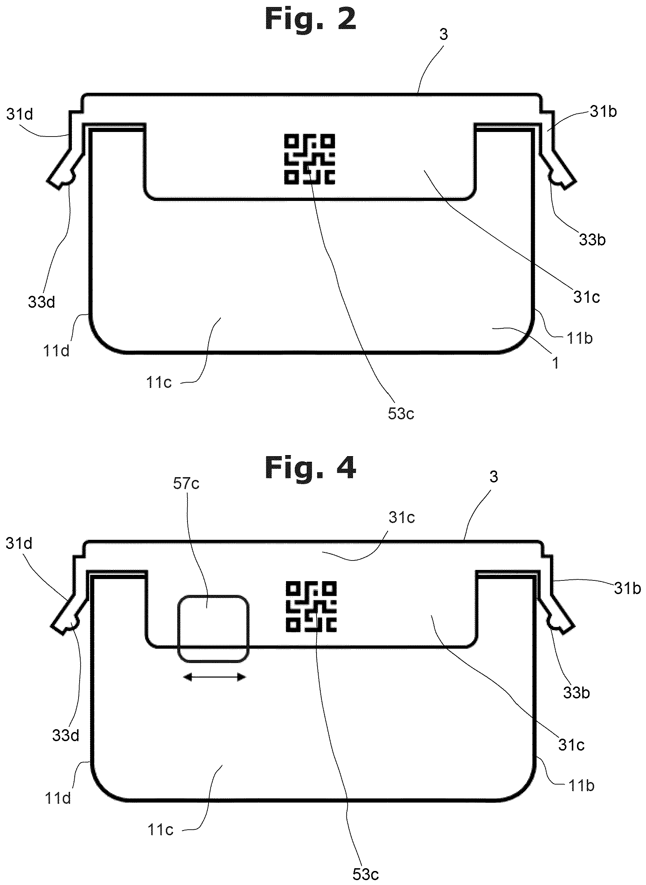

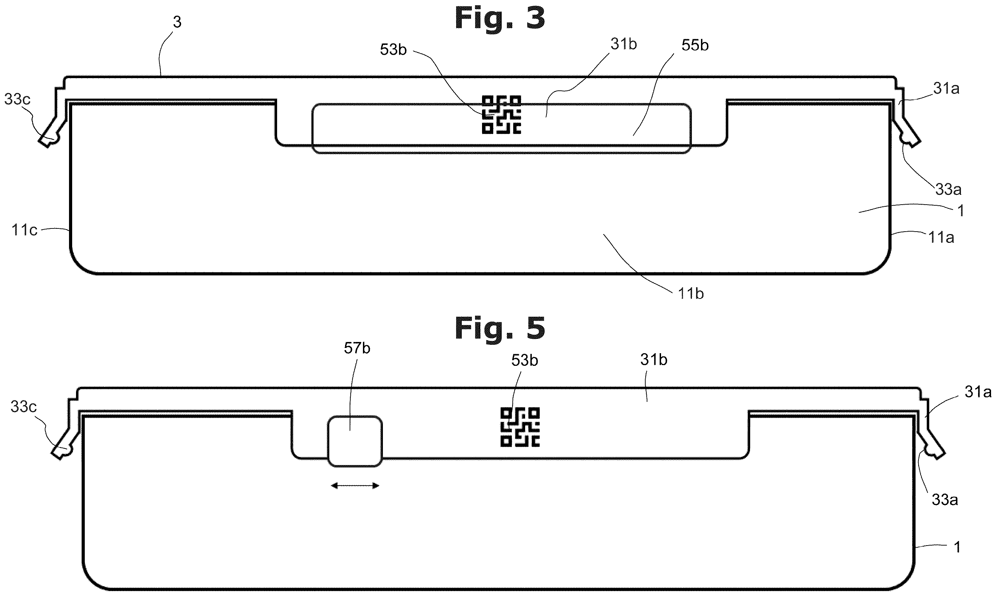

Wie aus den Figuren 3 bis 5 ersichtlich ist, können diese Klammern 55b, 57b, 57c in unterschiedlicher Breite und Färbung ausgebildet sein. So erstreckt sich die Klammer 55b nahezu über die gesamte Länge der Lasche 31b in der Fig. 3, während die Klammer 57c in der Fig. 4 sich lediglich über einen kurzen Abschnitt erstreckt. Wie aus der Fig. 4 ersichtlich ist, ist die Klammer 57c entlang der Lasche 31c beliebig verschiebbar. Dies ist durch den Doppelpfeil in der Fig. 4 angedeutet.

Die in der Fig. 5 dargestellte Klammer weist ein Aussehen ähnlich dem der in der Fig. 4 dargestellten Klammer 57c auf. Allerdings ist die Klammer 57c im Gegensatz zu den aus einem transparenten Material ausgebildeten Klammern 55b und 57c nicht transparent, sondern sie ist aus einem opaken Material ausgebildet. Daher kann diese Klammer 57c eine beliebige Farbe aufweisen.

Transparente Klammern sind geeignet, um darunter ein Stück Papier mit Beschriftung anzubringen, das bei Abnehmen der Klammer ohne störende Kleberückstände wieder entfernt werden kann. Die opaken Klammern können dazu dienen, durch Farbkodierungen eine Zuordnung zu dem Inhalt des Lebensmittelbehälters zu ermöglichen.

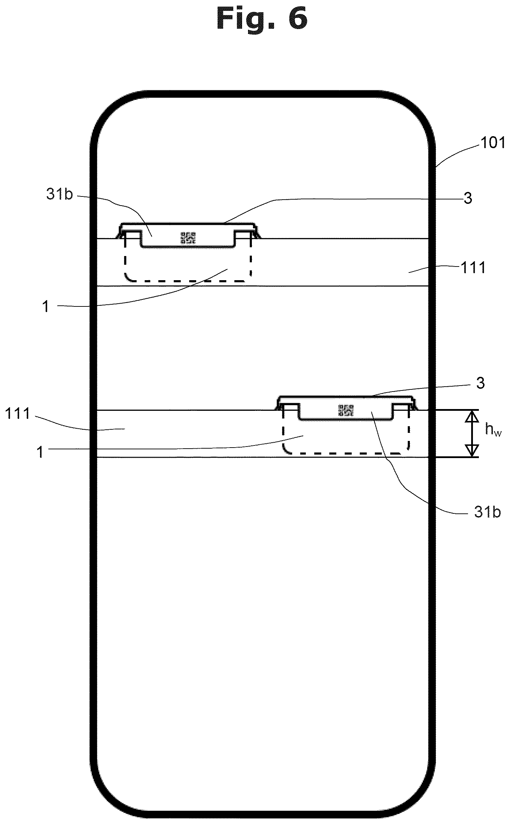

Die Fig. 6 zeigt schematisch eine Tür, insbesondere eine Kühlschranktür 101 mit einem erfindungsgemäßen Lagersystem. Das Lagersystem weist Abstellflächen 111 auf, die zumindest einen Boden 111b und eine Vorderwand 111a aufweisen. Eine Höhe der Vorderwand beträgt dabei h_{W}. Wie aus der Fig. 8 ersichtlich ist, ist die Höhe h_{W} der Vorderwand 111a so bemessen, dass sie kleiner als die Oberkante des Freiraums vom Boden des Lebensmittelbehälters 1 bzw. von dem Boden 111b der Abstellfläche 111 aus gemessen ist (Länge) h_{F} ist. Da die Dicke der Vorderwand 111a auch geringer als ein Abstand d zwischen dem Vorsprung 33b und dessen zugeordneten Seitenwand 11b ist (siehe Fig. 7) kann der Lebensmittelbehälter 1 so in das Abstellfach 111 eingesetzt werden, dass die Lasche 31b des Deckels 3 des Lebensmittelbehälters 1 die Vorderwand 111a überlappt. Somit ist ein Zugriff auf die Informationen an der Lasche 31b jederzeit möglich, ohne den Lebensmittelbehälter 1 aus dem Abstellfach entnehmen zu müssen.

Gemäß der bevorzugten Ausführungsform weist das Abstellfach außerdem eine Rückwand 111c auf, und der Abstand zwischen Vorderwand und Rückwand ist so bemessen, dass der Lebensmittelbehälter derart in das Fach eingesetzt ist, dass seine vordere Lasche 31b die Vorderwand 111a überlappt, während die gegenüberliegende Lasche 31d gegen die Rückwand 111c nahezu in Anlage ist. Durch diese Bauweise ist der zur Verfügung stehende Lagerraum optimal ausgenutzt, und es entstehen keine unnötigen Lehrräume, die unnötig Platz verbrauchen oder im Fall eines Kühlgerätes zu kühlen sind.

## Patentansprüche

1. Lebensmittelbehälter (1) mit
einem Boden (13)
Seitenwänden (11a, 11b, 11c), und
einem abnehmbaren Deckel (3), der mindestens ein Verriegelungsscharnier mit einer Lasche (31a, 31b, 31c, 31d) aufweist, das einer der Seitenwände (11a, 11b, 11c) zugeordnet und damit zum Verschließen des Lebensmittelbehälters mit der Seitenwand (11a, 11b, 11c) in Eingriff bringbar ist, wobei,
in einem durch den Deckel (3) verschlossenen Zustand des Lebensmittelbehälters (1) ein von dem Deckel (3) weg gerichteter Rand der Lasche (31a, 31b, 31c, 31d) von der Seitenwand (11a, 11b, 11c) beabstandet ist, sodass zwischen der Seitenwand (11a, 11b, 11c) und dem von dem Deckel (3) weg gerichteten Rand der Lasche (31a, 31b, 31c, 31d) ein Freiraum (35b, 35dd) ausgebildet ist.

2. Lebensmittelbehälter (1) nach Anspruch 1, wobei
die Lasche (31a, 31b, 31c, 31d) ausgehend von dem Deckel (3) für eine vorbestimmte Länge (h_{D}) parallel zu ihrer zugeordneten Seitenwand (11a, 11b, 11c) verläuft, um sich dann von der Seitenwand (11a, 11b, 11c) zu entfernen.

3. Lebensmittelbehälter (1) nach Anspruch 1 oder 2, wobei
die Lasche (31a, 31b, 31c, 31d) an ihrem von dem Deckel (3) weg gerichteten Rand einen zu der Seitenwand (11a, 11b, 11c) gerichteten Vorsprung (33a, 33b, 33c) aufweist.

4. Lebensmittelbehälter (1) nach Anspruch 3, wobei
der Vorsprung (33a, 33b, 33c) von der Seitenwand (11a, 11b, 11c) beabstandet ist.

5. Lebensmittelbehälter (1) nach einem der Ansprüche 1 bis 4, wobei an der Lasche (31a, 31b, 31c, 31d) eine den von dem Deckel (3) weg gerichteten Rand der Lasche (31a, 31b, 31c, 31d) umgreifende Klammer (55b, 57b, 57c) aufweist.

6. Lebensmittelbehälter (1) nach Anspruch 5, wobei die Klammer (55b, 57b, 57c) abnehmbar und/oder entlang des von dem Deckel (3) weg gerichteten Rands verschiebbar ausgebildet ist.

7. Lebensmittelbehälter (1) nach Anspruch 5 oder 6, wobei die Klammer (55b, 57b, 57c) mit einem an dem von dem Deckel (3) weg gerichteten Rand ausgebildeten Vorsprung (33a, 33b, 33c) mittels Formschluss in Eingriff ist.

8. Lebensmittelbehälter (1) nach einem der Ansprüche 1 bis 7, wobei an der Lasche (31a, 31b, 31c, 31d) eine optische Schnittstelle, bevorzugt in Form eines QR-Codes (53b, 53c) ausgebildet ist.

9. Lagersystem für Lebensmittelbehälter (1), mit
einem Abstellfach (111), das einen Boden (111b) und eine Vorderwand (111a) aufweist und zur Aufnahme eines Lebensmittelbehälter (1) eingerichtet und ausgeführt ist, und
mindestens einem Lebensmittelbehälter (1) gemäß einem der Ansprüche 1 bis 8, der in das Abstellfach (111) einsetzbar ist,
wobei bei einem in dem Abstellfach (111) eingesetzten Lebensmittelbehälter (1) ein Randabschnitt der Vorderwand (111a) in dem Freiraum (35b) zwischen der Seitenwand (11b) des Lebensmittelbehälters (1) und dem von dem Deckel (3) weg gerichteten Rand der Lasche (31b) aufgenommen ist.

10. Schrank, insbesondere Kühlschrank, Gefrierschank oder Kühl-Gefrierschrank mit einer Aufnahme zum Einsetzen eines Lagersystems gemäß Anspruch 9.
